# EUROPÄISCHE PATENTSCHRIFT

(11) **EP 3 491 780 B1**
(45) Veröffentlichungstag und Bekanntmachung des Hinweises auf die Patenterteilung: **07.10.2020**
(21) Anmeldenummer: 17739197.6
(22) Anmeldetag: 29.06.2017
(51) Int. Cl.: H04L 12/10, H04L 12/46, H04L 12/40, H02P 5/46

(54) **VERFAHREN ZUR REGELUNG EINES SPANNUNGSZWISCHENKREISES UND BUSSYSTEM**
METHOD FOR REGULATING A VOLTAGE LINK CIRCUIT, AND BUS SYSTEM
PROCÉDÉ DE RÉGULATION D'UN CIRCUIT DE TENSION INTERMÉDIAIRE ET SYSTÈME DE BUS

(30) Priorität: 26.07.2016 DE 102016008951
(43) Veröffentlichungstag der Anmeldung: 05.06.2019
(73) Patentinhaber: SEW-EURODRIVE GmbH & Co. KG, 76646 Bruchsal (DE)
(72) Erfinder: FUCHS, Manuel, 76709 Kronau (DE)
(86) Internationale Anmeldenummer: PCT/EP2017/025187
(87) Internationale Veröffentlichungsnummer: WO 2018/019427

(56) Entgegenhaltungen:
- EP-A1- 2 028 797
- EP-A2- 1 880 837
- DE-A1-102004 057 915

## Beschreibung

Die Erfindung betrifft ein Verfahren zur Regelung eines Spannungszwischenkreises und ein Bussystem.

Aus dem Stand der Technik ist bekannt, die Zwischenkreisspannung eines Bussystems, dessen Busteilnehmer einen gemeinsamen Zwischenkreis aufweisen, bei Laständerungen der Busteilnehmer durch Erkennung von Spannungsänderungen im Zwischenkreis und Nachregelung des Netzstromes auszugleichen.

**Aus der** EP 1 880 837 A2 **ist als nächstliegender Stand der Technik eine Servopresse mit Energiemanagement bekannt.**

**Aus der** EP 2 028 797 A1 **ist ein Verfahren zur Datenübertragung bekannt.**

**Aus der** DE 10 2004 057 915 A1 **ist ein Verfahren zum Steuern des Energieflusses bei einem Antrieb bekannt.**

Der Erfindung liegt daher die Aufgabe zugrunde, ein Verfahren zur Regelung eines Spannungszwischenkreises und ein Bussystem weiterzubilden, wobei der Umweltschutz verbessert werden soll.

Erfindungsgemäß wird die Aufgabe bei dem Verfahren zur Regelung eines Spannungszwischenkreises nach den in Anspruch 1 angegebenen Merkmalen und bei dem Bussystem nach den in Anspruch 6 angegebenen Merkmalen gelöst.

Wichtige Merkmale der Erfindung bei dem Verfahren zur Regelung eines Spannungszwischenkreises mittels eines Rückspeisemoduls eines seriellen Bussystems, aufweisend das Rückspeisemodul, Busteilnehmer und ein Mastermodul, wobei die Busteilnehmer aus dem gemeinsamen Spannungszwischenkreis gespeist werden, sind, dass
jeder Busteilnehmer periodisch seinen Leistungsaufnahmewert bestimmt, wobei ein Vorsteuerwert für den Spannungszwischenkreis die Summe der Leistungsaufnahmewerte aller Busteilnehmer des Bussystems ist,
wobei das Mastermodul ein Telegramm zur Abfrage der Leistungsaufnahmewerte an die Busteilnehmer sendet,
wobei ein Busteilnehmer, insbesondere ein letzter Busteilnehmer, seinen Leistungsaufnahmewert in das Telegramm schreibt und das Telegramm zurück an das Mastermodul schickt,
wobei jeder Busteilnehmer, den das Telegramm auf dem Rückweg zum Mastermodul passiert, seinen Leistungsaufnahmewert zu dem in dem Telegramm enthaltenen Leistungsaufnahmewert hinzuaddiert und diesen Wert mit der Summe der Leistungsaufnahmewerte überschreibt,
wobei ein dem Mastermodul unmittelbar nachgeordneter Busteilnehmer seinen Leistungsaufnahmewert zu dem in dem Telegramm enthaltenen Leistungsaufnahmewert hinzuaddiert, also den Vorsteuerwert für das Rückspeisemodul berechnet, und den Vorsteuerwert in das Telegramm schreibt,
wobei das Mastermodul das Telegramm auswertet und den Vorsteuerwert abspeichert,
wobei das Rückspeisemodul den Vorsteuerwert ausliest und auswertet und den Spannungszwischenkreis unter Verwendung des Vorsteuerwertes regelt.

Von Vorteil ist dabei, dass der Spannungszwischenkreis vorausschauend geregelt wird. Somit sind die Spannungsschwankungen im Spannungszwischenkreis sehr klein und die Kapazität der Kondensatoren des Spannungszwischenkreises ist reduzierbar. Somit sind Bauteile einsparbar.

Erfindungsgemäß verschickt das Mastermodul das Telegramm zur Abfrage der Leistungsaufnahmewerte periodisch und überschreibt einen gespeicherten Vorsteuerwert nach der Auswertung des Telegramms. Von Vorteil ist dabei, dass der Vorsteuerwert periodisch angepasst wird an die jeweils aktuellen Leistungsaufnahmewerte der Busteilnehmer.

Erfindungsgemäß wird das Telegramm zur Abfrage der Leistungsaufnahmewerte zumindest doppelt so oft verschickt, wie jeder Busteilnehmer seinen Leistungsaufnahmewert bestimmt. Von Vorteil ist dabei, dass die Busteilnehmer und das Mastermodul nicht aufeinander synchronisiert sind.

Bei einer vorteilhaften Ausgestaltung schreibt das Mastermodul und/oder ein Busteilnehmer eine Prüfziffer, insbesondere eine CRC-Prüfsumme, in das Telegramm, bevor das Telegramm versendet und/oder weitergeleitet wird, wobei jeder Busteilnehmer, bevor er den Leistungsaufnahmewert überschreibt, die Prüfziffer auswertet und ein fehlerhaftes Telegramm unverändert an das Mastermodul weiterleitet, und/oder wobei das Mastermodul die Prüfziffer auswertet, ein fehlerhaftes Telegramm verwirft und den Vorsteuerwert des fehlerhaften Telegramms löscht, so dass der im Mastermodul gespeicherte Vorsteuerwert unverändert bleibt. Von Vorteil ist dabei, dass zufällige Übertragungsfehler in dem Telegramm detektierbar sind. Somit wird verhindert, dass ein fehlerhafter Vorsteuerwert zur Regelung des Spannungszwischenkreises verwendet wird und die Sicherheit ist verbessert.

Bei einer vorteilhaften Ausgestaltung regelt das Rückspeisemodul die Spannung im Spannungszwischenkreis, wobei das Rückspeisemodul Strom aus dem Spannungszwischenkreis wechselrichtet, insbesondere sinusförmig wechselrichtet, und in ein Versorgungsnetz rückspeist, wenn der Vorsteuerwert die vom Spannungszwischenkreis in das Versorgungsnetz fließende Leistung, insbesondere betragsmäßig, unterschreitet. Erfindungsgemäß wechselrichtet, insbesondere sinusförmig wechselrichtet, das Rückspeisemodul Strom aus dem Spannungszwischenkreis und rückspeist den Strom in ein Versorgungsnetz, so dass die vom Spannungszwischenkreis über das Rückspeisemodul ins Versorgungsnetz fließende Leistung auf den Vorsteuerwert hin geregelt wird. Von Vorteil ist dabei, dass das Spannungsniveau im Spannungszwischenkreis vorausschauend geregelt wird. Dadurch sind große Spannungsschwankungen vermeidbar und die Kondensatoren des Spannungszwischenkreises sind kleiner dimensionierbar. Vorteilhafterweise wird genau die Differenz zwischen generatorisch erzeugtem Strom von einer ersten Gruppe von Busteilnehmern und motorisch genutztem Strom von einer zweiten Gruppe von Busteilnehmern in das Versorgungsnetz rückgespeist.

Bei einer vorteilhaften Ausgestaltung richtet das Rückspeisemodul Strom aus dem Versorgungsnetz gleich und speist den Strom in den Zwischenkreis ein, wenn der Vorsteuerwert die aus dem Versorgungsnetz in den Spannungszwischenkreis fließende Leistung, insbesondere betragsmäßig, überschreitet. Von Vorteil ist dabei, dass das Spannungsniveau im Spannungszwischenkreis vorausschauend geregelt wird. Dabei wird genau die Differenz zwischen generatorisch erzeugtem Strom von einer ersten Gruppe von Busteilnehmern und motorisch genutztem Strom von einer zweiten Gruppe von Busteilnehmern aus dem Versorgungsnetz in den Spannungszwischenkreis eingespeist.

Bei einer vorteilhaften Ausgestaltung überwacht ein Spannungsregler den Spannungszwischenkreis auf Spannungsschwankungen und regelt die Spannung im Spannungszwischenkreis nach. Von Vorteil ist dabei, dass Ungenauigkeiten im Vorsteuerwert korrigierbar sind.

Wichtige Merkmale bei dem Bussystem aufweisend ein Mastermodul und Busteilnehmer mit einem gemeinsamen Spannungszwischenkreis, wobei der Spannungszwischenkreis mittels eines Verfahrens zur Regelung eines Spannungszwischenkreises wie zuvor beschrieben beziehungsweise nach mindestens einem der auf das Verfahren bezogenen Ansprüche regelbar ist, sind, dass
die Busteilnehmer und das Mastermodul seriell angeordnet sind,
wobei das Mastermodul und die Busteilnehmer mittels zumindest einer Datenleitung miteinander verbunden sind.

Von Vorteil ist dabei, dass der Spannungszwischenkreis vorausschauend regelbar ist. Somit sind die Spannungsschwankungen im Spannungszwischenkreis sehr klein und die Kapazität der Kondensatoren des Spannungszwischenkreises ist reduzierbar. Dadurch sind Bauteile einsparbar.

Bei einer vorteilhaften Ausgestaltung weist ein zum Mastermodul unmittelbar benachbart angeordneter Busteilnehmer den höchsten Leistungsaufnahmewert und/oder die größten Schwankungen im Leistungsaufnahmewert auf. Von Vorteil ist dabei, dass die zeitliche Verzögerung durch die Busübertragung der Leistungsaufnahmewerte für den unmittelbar benachbart zum Mastermodul angeordneten Busteilnehmer am kleinsten ist. Somit ist die Genauigkeit des Vorsteuerwertes verbessert.

Bei einer vorteilhaften Ausgestaltung weist der Spannungszwischenkreis Stromschienen auf, die das Mastermodul und die Busteilnehmer miteinander verbinden. Von Vorteil ist dabei, dass das Mastermodul und die Busteilnehmer mechanisch und elektrisch leitend mittels der Stromschienen verbunden sind.

Bei einer vorteilhaften Ausgestaltung weist das Mastermodul ein Datenspeichermittel auf, in das ein Vorsteuerwert für den Spannungszwischenkreis speicherbar ist, wobei das Datenspeichermittel von einer Rückspeiseeinheit auslesbar ist, insbesondere zur Regelung des Spannungszwischenkreises. Von Vorteil ist dabei, dass der Vorsteuerwert für die Rückspeiseeinheit jederzeit aus dem Datenspeichermittel auslesbar ist. Sollte ein fehlerhafter Vorsteuerwert aus einem Telegramm verworfen werden, so ist immer noch der in dem Datenspeichermittel gespeicherte Vorsteuerwert eines älteren Telegramms für die Rückspeiseeinheit verfügbar.

Bei einer vorteilhaften Ausgestaltung weist jeder Busteilnehmer eine Rechnereinheit auf, wobei die Rechnereinheit eingerichtet ist, einen Leistungsaufnahmewert des jeweiligen Busteilnehmers zu berechnen. Von Vorteil ist dabei, dass der Leistungsaufnahmewert eines jeweiligen Busteilnehmers von diesem Busteilnehmer selbsttätig berechenbar ist.

Bei einer vorteilhaften Ausgestaltung weist die Rechnereinheit ein Summationsmittel auf, das eingerichtet ist, die Summe von zwei Leistungsaufnahmewerten zu bilden, insbesondere den Vorsteuerwert zu berechnen. Von Vorteil ist dabei, dass in das jeweilige Telegramm nur die Summe der Leistungsaufnahmewerte geschrieben wird. Somit ist das Telegramm kürzer als wenn alle Leistungsaufnahmewerte der Busteilnehmer einzeln in das Telegramm geschrieben würden. Dadurch ist die Übertragungsdauer des Telegramms verkürzbar und die Genauigkeit des Vorsteuerwertes ist verbessert.

Bei einer vorteilhaften Ausgestaltung weisen das Mastermodul und/oder die Busteilnehmer jeweils ein Zeitmessmittel auf. Von Vorteil ist dabei, dass der Leistungsaufnahmewert des jeweiligen Busteilnehmers von diesem selbsttätig periodisch bestimmbar ist. Vorteilhafterweise ist die Periode der Bestimmung des Leistungsaufnahmewerts nicht synchron mit dem Versenden des Telegramms zur Abfrage der Leistungsaufnahmewerte.

Bei einer vorteilhaften Ausgestaltung weist jeder Busteilnehmer eine elektronische Schaltung auf, wobei die elektronische Schaltung das Zeitmessmittel und/oder die Rechnereinheit aufweist, insbesondere wobei das Zeitmessmittel und/oder die Rechnereinheit in die elektronische Schaltung integriert sind. Von Vorteil ist dabei, dass der jeweilige Busteilnehmer kompakt ausführbar ist.

Die Erfindung wird nun anhand von einer Abbildung näher erläutert:

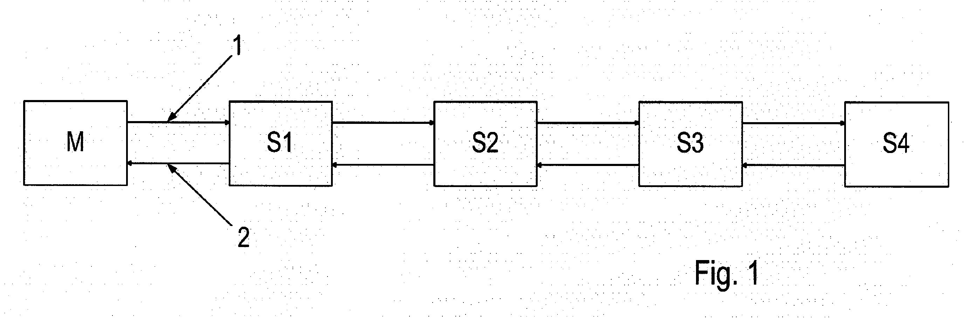

In der Figur 1 ist ein erfindungsgemäßes Bussystem schematisch dargestellt.

Das erfindungsgemäße Bussystem weist ein Mastermodul M und Busteilnehmer (S1, S2, S3, S4) auf, die seriell angeordnet und miteinander verbunden sind. Dabei weist das Bussystem einen dem Mastermodul M nachgeordneten ersten Busteilnehmer S1 auf. Das Bussystem weist einen dem ersten Busteilnehmer S1 nachgeordneten zweiten Busteilnehmer S2 auf, wobei der erste Busteilnehmer S1 dem zweiten Busteilnehmer S2 vorgeordnet ist. Der zweite Busteilnehmer S2 ist einem dritten Busteilnehmer S3 des Bussystems vorgeordnet und der dritte Busteilnehmer S3 ist dem zweiten Busteilnehmer S2 nachgeordnet. Der dritte Busteilnehmer S3 ist einem vierten Busteilnehmer S4 des Bussystems vorgeordnet und der vierte Busteilnehmer S4 ist dem dritten Busteilnehmer S3 nachgeordnet.

Dabei ist ein einem anderen Busteilnehmer (S1, S2, S3, S4) nachgeordneter Busteilnehmer (S1, S2, S3, S4) in Richtung der seriellen Anordnung weiter von dem Mastermodul M entfernt als der andere Busteilnehmer (S1, S2, S3, S4). Der andere Busteilnehmer (S1, S2, S3, S4), der in Richtung der seriellen Anordnung weniger weit von dem Mastermodul M entfernt ist als der Busteilnehmer (S1, S2, S3, S4), ist dem Busteilnehmer (S1, S2, S3, S4) vorgeordnet.

Das Bussystem ist beispielsweise eine industrielle Anlage, die verschiedene Geräte, beispielsweise Antriebe oder Elektronikbaugruppen, wie Antriebsumrichter für Elektromotoren, als Busteilnehmer (S1, S2, S3, S4) aufweist.

Der Datenbus weist eine erste Datenleitung 1 und eine zweite Datenleitung 2 auf, die jeweils die Busteilnehmer (S1, S2, S3, S4) und das Mastermodul M seriell miteinander verbinden.

Mittels der ersten Datenleitung 1 sendet das Mastermodul M Datenpakete (3, 4) an die Busteilnehmer (S1, S2, S3, S4), beispielsweise Steuerbefehle. Mittels der zweiten Datenleitung 2 senden die Busteilnehmer (S1, S2, S3, S4) Datenpakete (3, 4) an das Mastermodul M, beispielsweise Statusinformationen.

Jeder Busteilnehmer (S1, S2, S3, S4) weist eine erste Schnittstelle und eine zweite Schnittstelle auf, die vorzugsweise jeweils als Steckverbinderteil ausgeführt sind. Jede Datenleitung (1, 2) weist zumindest ein Datenkabel auf. Jedes Datenkabel weist ein erstes Gegensteckverbinderteil und zumindest ein zweites Gegensteckverbinderteil auf zur Datenübertragung zwischen den Busteilnehmern (S1, S2, S3, S4) entlang der jeweiligen Datenleitung (1, 2).

Somit ist jeder Busteilnehmer (S1, S2, S3, S4) mittels eines ersten Steckverbinderteils und des jeweiligen Datenkabels mit einem zweiten Steckverbinderteil eines vorgeordneten Busteilnehmers (S1, S2, S3, S4) verbindbar und mittels eines zweiten Steckverbinderteils und des jeweiligen Datenkabels mit einem ersten Steckverbinderteil eines nachgeordneten Busteilnehmers (S1, S2, S3, S4) verbindbar.

Vorzugsweise sind das jeweilige Datenkabel der ersten Datenleitung 1 und das jeweilige Datenkabel der zweiten Datenleitung 2 in einer gemeinsamen Kabelummantelung geführt angeordnet. Vorzugsweise ist in dieser Kabelummantelung auch eine Versorgungsleitung und/oder eine Masseleitung für die Busteilnehmer (S1, S2, S3, S4) angeordnet.

Jeder Busteilnehmer (S1, S2, S3, S4) weist einen Schalter, insbesondere eine elektronische Schaltung, auf, der mit der jeweiligen Datenleitung (1, 2) verbunden ist. Mittels des Schalters ist die Datenübertragung entlang der jeweiligen Datenleitung (1, 2) unterbrechbar.

Jeder Busteilnehmer (S1, S2, S3, S4) weist ein Zeitmessmittel, insbesondere Timer, auf. Vorzugsweise ist das Zeitmessmittel in der elektronischen Schaltung des Busteilnehmers (S1, S2, S3, S4) integriert ausgeführt.

Mittels der elektronischen Schaltung ist also die Datenübertragung entlang der jeweiligen Datenleitung (1, 2) nach Ablauf einer vorgegebenen Zeit unterbrechbar.

Jeder Busteilnehmer (S1, S2, S3, S4) weist eine Logikschaltung auf. Vorzugsweise ist die Logikschaltung in der elektronischen Schaltung des Busteilnehmers (S1, S2, S3, S4) integriert ausgeführt.

Mittels der Logikschaltung sind Datenpakete (3, 4) auf dem Datenbus auswertbar, Insbesondere ist der Absender eines Datenpaketes (3, 4) erkennbar.

Sollte ein Busteilnehmer (S1, S2, S3, S4) inaktiv sein, so wird ein Datenpaket (3, 4) ununterbrochen und ohne zeitliche Verzögerung durch den inaktiven Busteilnehmer (S1, S2, S3, S4) hindurch zum nachgeordneten oder vorgeordneten Busteilnehmer (S1, S2, S3, S4) weitergeleitet. Ein Datenpaket (3, 4) passiert einen inaktiven Busteilnehmer (S1, S2, S3, S4) ungehindert.

Vorzugsweise ist der Datenbus digital ausgeführt.

Zur Initialisierung des Bussystems sendet das Mastermodul M eine Aufforderung an die ihm nachgeordneten Busteilnehmer (S1, S2, S3, S4) sich beim Mastermodul M anzumelden. Ein dem Mastermodul M nachgeordneter aktiver Busteilnehmer (S1, S2, S3, S4) meldet sich beim Mastermodul M an und leitet die Aufforderung zur Anmeldung beim Mastermodul M an die ihm nachgeordneten Busteilnehmer (S1, S2, S3, S4) weiter. Daraufhin wartet der angemeldete Busteilnehmer (S1, S2, S3, S4) eine vorgegebene Zeitspanne ab, ob sich ein ihm nachgeordneter Busteilnehmer (S1, S2, S3, S4) beim Mastermodul M anmeldet.

Falls sich kein nachgeordneter Busteilnehmer (S1, S2, S3, S4) beim Mastermodul anmeldet, schließt der letzte angemeldete Busteilnehmer (S1, S2, S3, S4), sobald die vorgegebene Zeitspanne abgelaufen ist, das Bussystem, indem er die erste Datenleitung 1 und die zweite Datenleitung 2 miteinander verbindet, insbesondere kurzschließt. Somit wird ein Datenpaket (3, 4), das mittels der ersten Datenleitung 1 vom Mastermodul M an die Busteilnehmer (S1, S2, S3, S4) gesendet wird, an dem letzten Busteilnehmer (S1, S2, S3, S4) in die zweite Datenleitung 2 weitergeleitet und zurück zum Mastermodul M geleitet.

Der letzte Busteilnehmer (S1, S2, S3, S4) ist derjenige Busteilnehmer (S1, S2, S3, S4), der sich zuletzt beim Mastermodul M anmeldet und keine aktiven nachgeordneten Busteilnehmer (S1, S2, S3, S4) aufweist.

Durch einen inaktiven Busteilnehmer (S1, S2, S3, S4) wird die Aufforderung zur Anmeldung beim Mastermodul M hindurchgeleitet, ohne dass dieser sich selbst beim Mastermodul M anmeldet.

Nachdem das Bussystem geschlossen ist, wird eine Freigabe durch eine übergeordnete Steuerung oder einen Bediener erteilt und der Betrieb des Bussystems aufgenommen.

Sollte ein Busteilnehmer (S1, S2, S3, S4) sich verspätet anmelden wollen, also nachdem die vorgegebene Zeitspanne nach der Anmeldung des letzten Busteilnehmers (S1, S2, S3, S4) abgelaufen ist, so sendet dieser Busteilnehmer (S1, S2, S3, S4) ein Datenpaket (3, 4) an das Mastermodul M. Falls bereits eine Freigabe erteilt wurde, wird dieses Datenpaket (3, 4) von einem vorgeordneten Busteilnehmer (S1, S2, S3, S4), der beim Mastermodul M angemeldet ist, gestoppt und nicht zum Mastermodul M weitergeleitet.

Sobald die Freigabe widerrufen wird, wird das Datenpaket (3, 4) des verspäteten Busteilnehmers (S1, S2, S3, S4) an das Mastermodul M weitergeleitet und der verspätete Busteilnehmer (S1, S2, S3, S4) wird in das Bussystem aufgenommen.

Sollte der verspätete Busteilnehmer (S1, S2, S3, S4) keine nachgeordneten Busteilnehmer (S1, S2, S3, S4) aufweisen, die beim Mastermodul M angemeldet sind, so wird dieser der neue letzte Busteilnehmer (S1, S2, S3, S4) und schließt das Bussystem, nachdem er die vorgegebene Zeitspanne zur Anmeldung eines Busteilnehmers (S1, S2, S3, S4) abgewartet hat.

Die vorgegebene Zeitspanne zur Anmeldung eines Busteilnehmers (S1, S2, S3, S4) ist an die Busteilnehmer (S1, S2, S3, S4) anpassbar. Dabei ist die Zeitspanne derart wählbar, dass Busteilnehmer (S1, S2, S3, S4), die eine längere Inbetriebnahmezeit aufweisen, sicher beim Mastermodul M angemeldet werden.

Bei der Initialisierung des Bussystems werden automatisch Busadressen für die Busteilnehmer (S1, S2, S3, S4) vergeben. Dazu sendet das Mastermodul M die Busadresse "1" an den ersten Busteilnehmer S1. Der erste Busteilnehmer S1 meldet sich mit dieser Busadresse beim Mastermodul M an und inkrementiert die Busadresse um 1 und leitet sie an den ihm nachgeordneten Busteilnehmer (S2, S3, S4) weiter. Der nachgeordnete Busteilnehmer (S1, S2, S3, S4) meldet sich mit der inkrementierten Busadresse beim Mastermodul M an, hier also die Busadresse "2", inkrementiert diese Busadresse wiederum um 1 und leitet sie an den ihm nachgeordneten Busteilnehmer (S2, S3, S4) weiter.

Zur Begrenzung der Anzahl der Busteilnehmer (S1, S2, S3, S4) im Bussystem wird ein Busteilnehmer (S1, S2, S3, S4), der eine Busadresse erhält, die größer als die maximal erlaubte Anzahl von Busteilnehmern (S1, S2, S3, S4) ist, diese Busadresse nicht weiter inkrementieren, sondern leitet die gleiche Busadresse an den ihm nachgeordneten Busteilnehmer (S1, S2, S3, S4) weiter, der sich mit dieser Busadresse beim Mastermodul M anmeldet. Sobald das Mastermodul M eine Busadresse erhält, die größer als die maximal erlaubte Anzahl von Busteilnehmern (S1, S2, S3, S4) ist, bricht das Mastermodul M die Initialisierung des Bussystems ab und sendet eine Fehlermeldung an eine dem Mastermodul M übergeordnete Steuerung.

Sollte ein Busteilnehmer (S1, S2, S3, S4), der noch nicht aktiv ist, also ein inaktiver Busteilnehmer (S1, S2, S3, S4) eine Busadresse von einem ihm vorgeordneten Busteilnehmer (S1, S2, S3, S4) oder dem Mastermodul M erhalten, so wird diese Busadresse durch den inaktiven Busteilnehmer (S1, S2, S3, S4) hindurchgeschleift ohne inkrementiert zu werden und an einen nachgeordneten Busteilnehmer (S1, S2, S3, S4) vergeben.

Die Busteilnehmer (S1, S2, S3, S4) weisen einen gemeinsamen Spannungszwischenkreis zur Speisung der Busteilnehmer (S1, S2, S3, S4) auf. Vorzugsweise ist der Spannungszwischenkreis mittels Stromschienen ausgeführt.

Der Spannungszwischenkreis ist mit einem nicht dargestellten Rückspeisemodul verbunden, das von dem Mastermodul gesteuert wird, insbesondere das in dem Mastermodul integriert ist. Mittels des Rückspeisemoduls wird überschüssige Energie aus dem Spannungszwischenkreis wechselgerichtet, insbesondere sinusförmig wechselgerichtet, und in ein Versorgungsnetz, insbesondere Stromversorgungsnetz, rückgespeist.

Zur Regelung des Spannungsniveaus im Spannungszwischenkreis wird der Leistungsaufnahmewert aller Busteilnehmer (S1, S2, S3, S4) im Bussystem bestimmt. Dazu wird der Leistungsaufnahmewert jedes einzelnen Busteilnehmers (S1, S2, S3, S4) bestimmt und diese Leistungsaufnahmewerte werden zu einem Vorsteuerwert für den Spannungszwischenkreis summiert.

Jeder Busteilnehmer (S1, S2, S3, S4) bestimmt intern seinen Leistungsaufnahmewert zeitlich wiederkehrend, vorzugsweise mit einer Periodendauer von 125 µs. Der Leistungsaufnahmewert ist dabei der Wert der Leistung, die der Busteilnehmer (S1, S2, S3, S4) zu dem Zeitpunkt der Berechnung aufnimmt oder abgibt. Dabei gibt das Vorzeichen des Leistungsaufnahmewerts an, ob der Busteilnehmer (S1, S2, S3, S4) Leistung aufnimmt oder abgibt. Im generatorischen Betrieb gibt der jeweilige Busteilnehmer (S1, S2, S3, S4) Leistung ab und im motorischen Betrieb nimmt der jeweilige Busteilnehmer (S1, S2, S3, S4) Leistung auf.

Das Mastermodul M sendet ein Telegramm an alle Busteilnehmer (S1, S2, S3, S4), um den Vorsteuerwert anzufordern, dieses Telegramm wird unverändert durch alle Busteilnehmer (S1, S2, S3, S4) hindurchgeleitet. Der letzte Busteilnehmer (S1, S2, S3, S4) des Bussystems befüllt das Telegramm mit seinem Leistungsaufnahmewert und sendet es an das Mastermodul M zurück. Vorteilhafterweise wird dieses Telegramm vom Mastermodul M zeitlich wiederkehrend mit einer Periodendauer, die kleiner als die halbe Periodendauer zur Bestimmung des Leistungsaufnahmewerts jedes Busteilnehmers (S1, S2, S3, S4) ist, insbesondere einer Periodendauer von 60 µs, versendet.

Jedes Telegramm weist eine Prüfziffer auf, insbesondere eine CRC-Prüfsumme (cyclic redundancy check). Mittels der Prüfziffer lässt sich das jeweilige Telegramm hinsichtlich zufälliger Übertragungsfehler überprüfen.

Jeder Busteilnehmer (S1, S2, S3, S4), den das Telegramm auf dem Rückweg zum Mastermodul passiert, wertet die Prüfziffer aus und addiert seinen Leistungsaufnahmewert zu dem in dem Telegramm enthaltenen Leistungsaufnahmewert hinzu und sendet das Telegramm mit dieser Summe an den ihm vorgeordneten Busteilnehmer (S1, S2, S3, S4). Die Zeit zur Verarbeitung des Telegramms im Busteilnehmer (S1, S2, S3, S4) ist mindestens um den Faktor zehn kleiner als die Periodendauer des Telegramms, vorzugsweise mindestens um den Faktor 20 kleiner, insbesondere wobei die Zeit zur Verarbeitung des Telegramms 2,5 µs beträgt. Sollte der jeweilige Busteilnehmer (S1, S2, S3, S4) bei der Auswertung der Prüfziffer feststellen, dass das jeweilige Telegramm fehlerhaft ist, so wird das Telegramm von den Busteilnehmern (S1, S2, S3, S4) unverändert an das Mastermodul M weitergeleitet und von diesem verworfen.

Der vorgeordnete Busteilnehmer (S1, S2, S3, S4) addiert ebenfalls seinen Leistungsaufnahmewert zu dem in dem Telegramm enthaltenen Leistungsaufnahmewert hinzu und sendet das Telegramm mit dieser Summe an den jeweiligen ihm vorgeordneten Busteilnehmer (S1, S2, S3, S4).

Der dem Mastermodul M unmittelbar nachgeordnete Busteilnehmer (S1, S2, S3, S4), insbesondere der erste Busteilnehmer S1, addiert seinen Leistungsaufnahmewert ebenfalls zu dem in dem Telegramm enthaltenen Wert für den Leistungsaufnahmewert hinzu und berechnet somit den Vorsteuerwert für den Spannungszwischenkreis.

Das Mastermodul M liest das Telegramm aus, wertet die Prüfziffer aus und speichert den Vorsteuerwert in seinem Datenspeichermittel ab. Dabei wird ein in dem Datenspeichermittel eventuell vorhandener alter Vorsteuerwert überschrieben. Sollte das Mastermodul M bei der Auswertung der Prüfziffer feststellen, dass das Telegramm fehlerhaft ist, so wird das Telegramm vom Mastermodul M verworfen und der alte Vorsteuerwert bleibt im Datenspeichermittel erhalten.

Das Rückspeisemodul verwendet den in dem Mastermodul gespeicherten Vorsteuerwert zur Regelung des Spannungsniveaus im Spannungszwischenkreis, indem dem Spannungszwischenkreis genau so viel Leistung aus dem Versorgungsnetz zugeführt wird, wie von den Busteilnehmern gemäß Vorsteuerwert entnommen wird beziehungsweise gerade so viel Leistung in das Versorgungsnetz rückgespeist wird, das das Spannungsniveau nicht absinkt.

Zusätzlich wird der Spannungszwischenkreis mittels eines Spannungsreglers auf Spannungsschwankungen überwacht und nachgeregelt. Der Spannungsregler korrigiert so Ungenauigkeiten in dem Vorsteuerwert.

Die Bestimmung des Vorsteuerwertes erfolgt zeitlich wiederkehrend. Die Anzahl der Busteilnehmer (S1, S2, S3, S4) im seriellen Bussystem wird begrenzt durch die Periodendauer bei der Bestimmung des Vorsteuerwertes, also der Zeit zwischen zwei Telegrammen zur Ermittlung des Vorsteuerwertes. Der Leistungsaufnahmewert von einem nächstbenachbarten Busteilnehmer (S1, S2, S3, S4) des Mastermoduls M benötigt 2,5 µs bis er das Mastermodul M erreicht. Der Leistungsaufnahmewert eines Busteilnehmers (S1, S2, S3, S4), der durch beispielsweise neun zwischengeordnete Busteilnehmer (S1, S2, S3, S4) von dem Mastermodul M beabstandet ist, benötigt 25 µs bis er das Mastermodul M erreicht.

Zwischen einem Busteilnehmer (S1, S2, S3, S4) mit großem Leistungsaufnahmewert oder stark schwankendem Leistungsaufnahmewert und dem Mastermodul M sind daher möglichst wenige weitere Busteilnehmer (S1, S2, S3, S4) in dem seriellen Bussystem anzuordnen, so dass die Zeitspanne zwischen der Berechnung des Leistungsaufnahmewerts durch den Busteilnehmer und der Auswertung des Vorsteuerwertes durch das Mastermodul möglichst kurz ist.

### Bezugszeichenliste

- M: Mastermodul
- S1: erster Busteilnehmer
- S2: zweiter Busteilnehmer
- S3: dritter Busteilnehmer
- S4: vierter Busteilnehmer
- 1: erste Datenleitung
- 2: zweite Datenleitung

## Patentansprüche

1. Verfahren zur Regelung eines Spannungszwischenkreises mittels eines Rückspeisemoduls eines seriellen Bussystems, aufweisend das Rückspeisemodul, Busteilnehmer (S1, S2, S3, S4) und ein Mastermodul (M),
wobei die Busteilnehmer (S1, S2, S3, S4) aus dem gemeinsamen Spannungszwischenkreis gespeist werden,
wobei jeder Busteilnehmer (S1, S2, S3, S4) periodisch seinen Leistungsaufnahmewert bestimmt, wobei ein Vorsteuerwert für den Spannungszwischenkreis die Summe der Leistungsaufnahmewerte aller Busteilnehmer (S1, S2, S3, S4) des Bussystems ist,
wobei das Mastermodul (M) ein Telegramm zur Abfrage der Leistungsaufnahmewerte an die Busteilnehmer (S1, S2, S3, S4) sendet,
**dadurch gekennzeichnet, dass**
ein Busteilnehmer (S1, S2, S3, S4), insbesondere ein letzter Busteilnehmer (S1, S2, S3, S4), seinen Leistungsaufnahmewert in das Telegramm schreibt und das Telegramm zurück an das Mastermodul (M) schickt,
wobei jeder Busteilnehmer (S1, S2, S3, S4), den das Telegramm auf dem Rückweg zum Mastermodul (M) passiert, seinen Leistungsaufnahmewert zu dem in dem Telegramm enthaltenen Leistungsaufnahmewert hinzuaddiert und diesen Wert mit der Summe der Leistungsaufnahmewerte überschreibt,
wobei ein dem Mastermodul (M) unmittelbar nachgeordneter Busteilnehmer (S1, S2, S3, S4) seinen Leistungsaufnahmewert zu dem in dem Telegramm enthaltenen Leistungsaufnahmewert hinzuaddiert, also den Vorsteuerwert für das Rückspeisemodul berechnet, und den Vorsteuerwert in das Telegramm schreibt,
wobei das Mastermodul (M) das Telegramm auswertet und den Vorsteuerwert abspeichert,
wobei das Rückspeisemodul den Vorsteuerwert ausliest und auswertet und den Spannungszwischenkreis unter Verwendung des Vorsteuerwertes regelt,
wobei das Mastermodul (M) das Telegramm zur Abfrage der Leistungsaufnahmewerte periodisch verschickt und einen gespeicherten Vorsteuerwert nach der Auswertung des Telegramms überschreibt,
wobei das Telegramm zur Abfrage der Leistungsaufnahmewerte zumindest doppelt so oft verschickt wird, wie jeder Busteilnehmer (S1, S2, S3, S4) seinen Leistungsaufnahmewert bestimmt,
wobei das Rückspeisemodul Strom aus dem Spannungszwischenkreis wechselrichtet, insbesondere sinusförmig wechselrichtet, und in ein Versorgungsnetz rückspeist, so dass die vom Spannungszwischenkreis über das Rückspeisemodul ins Versorgungsnetz fließende Leistung auf den Vorsteuerwert hin geregelt wird.

2. Verfahren nach Anspruch 1,
**dadurch gekennzeichnet, dass**
das Mastermodul (M) und/oder ein Busteilnehmer (S1, S2, S3, S4) eine Prüfziffer, insbesondere eine CRC-Prüfsumme, in das Telegramm schreibt, bevor das Telegramm versendet und/oder weitergeleitet wird,
wobei jeder Busteilnehmer (S1, S2, S3, S4), bevor er den Leistungsaufnahmewert überschreibt, die Prüfziffer auswertet und ein fehlerhaftes Telegramm unverändert an das Mastermodul (M) weiterleitet.

3. Verfahren nach Anspruch 1 oder 2,
**dadurch gekennzeichnet, dass**
wobei das Mastermodul (M) die Prüfziffer auswertet, ein fehlerhaftes Telegramm verwirft und den Vorsteuerwert des fehlerhaften Telegramms löscht, so dass der im Mastermodul (M) gespeicherte Vorsteuerwert unverändert bleibt.

4. Verfahren nach einem der vorangegangenen Ansprüche,
**dadurch gekennzeichnet, dass**
das Rückspeisemodul die Spannung im Spannungszwischenkreis regelt,
wobei das Rückspeisemodul Strom aus dem Spannungszwischenkreis wechselrichtet, insbesondere sinusförmig wechselrichtet, und in ein Versorgungsnetz rückspeist, wenn der Vorsteuerwert die vom Spannungszwischenkreis in das Versorgungsnetz fließende Leistung, insbesondere betragsmäßig, unterschreitet.

5. Verfahren nach einem der vorangegangenen Ansprüche,
**dadurch gekennzeichnet, dass**
das Rückspeisemodul Strom aus dem Versorgungsnetz gleichrichtet und in den Zwischenkreis einspeist, wenn der Vorsteuerwert die aus dem Versorgungsnetz in den Spannungszwischenkreis fließende Leistung, insbesondere betragsmäßig, überschreitet.

6. Verfahren zur Regelung eines Spannungszwischenkreises nach mindestens einem der vorangegangenen Ansprüche,
**dadurch gekennzeichnet, dass**
ein Spannungsregler den Spannungszwischenkreis auf Spannungsschwankungen überwacht und die Spannung im Spannungszwischenkreis nachgeregelt.

7. Bussystem aufweisend ein Mastermodul (M), **ein Rückspeisemodul, und** Busteilnehmer (S1, S2, S3, S4) mit einem gemeinsamen Spannungszwischenkreis, wobei der Spannungszwischenkreis mittels eines Verfahrens zur Regelung eines Spannungszwischenkreises nach mindestens einem der Ansprüche 1 bis 5 regelbar ist,
**dadurch gekennzeichnet, dass**
die Busteilnehmer (S1, S2, S3, S4) und das Mastermodul (M) seriell angeordnet sind,
wobei das Mastermodul (M) und die Busteilnehmer (S1, S2, S3, S4) mittels zumindest einer Datenleitung (1, 2) miteinander verbunden sind.

8. Bussystem nach Anspruch 7,
**dadurch gekennzeichnet, dass**
ein zum Mastermodul (M) unmittelbar benachbart angeordneter Busteilnehmer (S1, S2, S3, S4) den höchsten Leistungsaufnahmewert und/oder die größten Schwankungen im Leistungsaufnahmewert aufweist.

9. Bussystem nach Anspruch 7 oder 8,
**dadurch gekennzeichnet, dass**
der Spannungszwischenkreis Stromschienen aufweist, die das Mastermodul (M) und die Busteilnehmer (S1, S2, S3, S4) miteinander verbinden.

10. Bussystem nach mindestens einem der Ansprüche 7 bis 9,
**dadurch gekennzeichnet, dass**
das Mastermodul (M) ein Datenspeichermittel aufweist, in das ein Vorsteuerwert für den Spannungszwischenkreis speicherbar ist,
wobei das Datenspeichermittel von der Rückspeiseeinheit auslesbar ist, insbesondere zur Regelung des Spannungszwischenkreises.

11. Bussystem nach mindestens einem der Ansprüche 7 bis 10,
**dadurch gekennzeichnet, dass**
jeder Busteilnehmer (S1, S2, S3, S4) eine Rechnereinheit aufweist,
wobei die Rechnereinheit eingerichtet ist, einen Leistungsaufnahmewert des jeweiligen Busteilnehmers (S1, S2, S3, S4) zu berechnen,
und/oder
wobei die Rechnereinheit ein Summationsmittel aufweist, das eingerichtet ist, die Summe von zwei Leistungsaufnahmewerten zu bilden, insbesondere den Vorsteuerwert zu berechnen.

12. Bussystem nach mindestens einem der Ansprüche 7 bis 11,
**dadurch gekennzeichnet, dass**
das Mastermodul (M) und/oder die Busteilnehmer (S1, S2, S3, S4) jeweils ein Zeitmessmittel aufweisen.

13. Bussystem nach Anspruch 11 und/oder 12,
**dadurch gekennzeichnet, dass**
jeder Busteilnehmer (S1, S2, S3, S4) eine elektronische Schaltung aufweist,
wobei die elektronische Schaltung das Zeitmessmittel und/oder die Rechnereinheit aufweist, insbesondere wobei das Zeitmessmittel und/oder die Rechnereinheit in die elektronische Schaltung integriert sind.

## Claims

1. Method for the closed-loop control of a voltage DC link by means of a backfeeding module of a serial bus system, which comprises the backfeeding module, bus subscribers (S1, S2, S3, S4) and a master module (M),
the bus subscribers (S1, S2, S3, S4) being powered from the shared voltage DC link,
each bus subscriber (S1, S2, S3, S4) periodically determining its power consumption value, a feedforward value for the voltage DC link being the sum of the power consumption values of all the bus subscribers (S1, S2, S3, S4) of the bus system,
the master module (M) transmitting a telegram for querying the power consumption values to the bus subscribers (S1, S2, S3, S4),
**characterised in that**
a bus subscriber (S1, S2, S3, S4), in particular a final bus subscriber (S1, S2, S3, S4), writes its power consumption value to the telegram and sends the telegram back to the master module (M),
each bus subscriber (S1, S2, S3, S4) by which the telegram passes on the way back to the master module (M) adding its power consumption value to the power consumption value contained in the telegram and overwriting that value with the sum of the power consumption values,
a bus subscriber (S1, S2, S3, S4) arranged immediately downstream of the master module (M) adding its power consumption value to the power consumption value contained in the telegram, i.e. calculating the feedforward value for the backfeeding module, and writing the feedforward value to the telegram,
the master module (M) analysing the telegram and storing the feedforward value,
the backfeeding module reading out and analysing the feedforward value and controlling the voltage DC link by using the feedforward value,
the master module (M) periodically sending the telegram for querying the power consumption values and overwriting a stored feedforward value after analysing the telegram, the telegram for querying the power consumption values being sent at least twice as often as each bus subscriber (S1, S2, S3, S4) determines its power consumption value,
the backfeeding module inverting current from the voltage DC link, in particular inverting it sinusoidally, and backfeeding it into a power grid such that the power flowing into the power grid from the voltage DC link via the backfeeding module is controlled towards the feedforward value.

2. Method according to claim 1,
**characterised in that**
the master module (M) and/or a bus subscriber (S1, S2, S3, S4) writes a check digit, in particular a CRC check digit, to the telegram before the telegram is sent out and/or forwarded,
each bus subscriber (S1, S2, S3, S4) analysing the check digit and forwarding an erroneous telegram to the master module (M) in unchanged form before overwriting the power consumption value.

3. Method according to either claim 1 or claim 2,
**characterised in that**
the master module (M) analyses the check digit, rejects an erroneous telegram and deletes the feedforward value of the erroneous telegram such that the feedforward value stored in the master module (M) remains unchanged.

4. Method according to any of the preceding claims,
**characterised in that**
the backfeeding module controls the voltage in the voltage DC link,
the backfeeding module inverting current from the voltage DC link, in particular inverting it sinusoidally, and backfeeding it into a power grid if the feedforward value drops below, in particular in terms of magnitude, the power flowing into the power grid from the voltage DC link.

5. Method according to any of the preceding claims,
**characterised in that**
the backfeeding module rectifies current from the power grid and feeds it into the DC link if the feedforward value exceeds, in particular in terms of magnitude, the power flowing into the voltage DC link from the power grid.

6. Method for the closed-loop control of a voltage DC link according to at least one of the preceding claims,
**characterised in that**
a voltage regulator monitors the voltage DC link for voltage fluctuations and readjusts the voltage in the voltage DC link.

7. Bus system comprising a master module (M), a backfeeding module and bus subscribers (S1, S2, S3, S4) having a shared voltage DC link, the voltage DC link being controllable by means of a method for the closed-loop control of a voltage DC link according to at least one of claims 1 to 5,
**characterised in that**
the bus subscribers (S1, S2, S3, S4) and the master module (M) are arranged in series,
the master module (M) and the bus subscribers (S1, S2, S3, S4) being interconnected by means of at least one data line (1, 2).

8. Bus system according to claim 7,
**characterised in that**
a bus subscriber (S1, S2, S3, S4) arranged immediately adjacent to the master module (M) has the highest power consumption value and/or the greatest fluctuations in the power consumption value.

9. Bus system according to either claim 7 or claim 8,
**characterised in that**
the voltage DC link comprises busbars which interconnect the master module (M) and the bus subscribers (S1, S2, S3, S4).

10. Bus system according to at least one of claims 7 to 9,
**characterised in that**
the master module (M) comprises a data storage means in which a feedforward value for the voltage DC link can be stored,
the data storage means being able to be read out by the backfeeding unit, in particular for the closed-loop control of the voltage DC link.

11. Bus system according to at least one of claims 7 to 10,
**characterised in that**
each bus subscriber (S1, S2, S3, S4) comprises a computer unit,
the computer unit being configured to calculate a power consumption value of its respective bus subscriber (S1, S2, S3, S4)
and/or
the computer unit comprising a summation means configured to generate the sum of two power consumption values, in particular to calculate the feedforward value.

12. Bus system according to at least one of claims 7 to 11,
**characterised in that**
the master module (M) and/or the bus subscribers (S1, S2, S3, S4) each comprise a time-measuring means.

13. Bus system according to claim 11 and/or claim 12,
**characterised in that**
each bus subscriber (S1, S2, S3, S4) comprises an electronic circuit,
the electronic circuit comprising the time-measuring means and/or the computer unit,
the time-measuring means and/or the computer unit in particular being integrated in the electronic circuit.

## Revendications

1. Procédé de régulation d'un circuit intermédiaire de tension au moyen d'un module de réinjection d'un système de bus série, présentant le module de réinjection, des participants au bus (S1, S2, S3, S4) et un module maître (M),
dans lequel les participants au bus (S1, S2, S3, S4) sont alimentés à partir du circuit intermédiaire de tension commun,
dans lequel chaque participant au bus (S1, S2, S3, S4) détermine périodiquement sa valeur de consommation électrique,
dans lequel une valeur pilote pour le circuit intermédiaire de tension est la somme des valeurs de consommation électrique de tous les participants au bus (S1, S2, S3, S4) du système de bus,
dans lequel le module maître (M) envoie un télégramme aux participants au bus (S1, S2, S3, S4) pour interroger les valeurs de consommation électrique,
**caractérisé en ce que**
un participant au bus (S1, S2, S3, S4), en particulier un dernier participant au bus (S1, S2, S3, S4), écrit sa valeur de consommation électrique dans le télégramme et renvoie le télégramme au module maître (M),
dans lequel chaque participant au bus (S1, S2, S3, S4) par lequel le télégramme passe sur le chemin de retour vers le module maître (M) ajoute sa valeur de consommation électrique à la valeur de consommation électrique contenue dans le télégramme et écrase cette valeur par la somme des valeurs de consommation électrique,
dans lequel un participant au bus (S1, S2, S3, S4) placé immédiatement en aval du module maître (M) ajoute sa valeur de consommation électrique à la valeur de consommation électrique contenue dans le télégramme, c'est-à-dire calcule la valeur pilote pour le module de réinjection, et écrit la valeur pilote dans le télégramme,
dans lequel le module maître (M) évalue le télégramme et stocke la valeur pilote,
dans lequel le module de réinjection lit et évalue la valeur pilote et régule le circuit intermédiaire de tension à l'aide de la valeur pilote,
dans lequel le module maître (M) envoie périodiquement le télégramme d'interrogation des valeurs de consommation électrique et écrase une valeur pilote stockée après l'évaluation du télégramme,
dans lequel le télégramme d'interrogation des valeurs de consommation électrique est envoyé au moins deux fois plus souvent que chaque participant au bus (S1, S2, S3, S4) détermine sa valeur de consommation électrique,
dans lequel le module de réinjection convertit en courant alternatif, en particulier en courant alternatif sinusoïdal, un courant provenant du circuit intermédiaire de tension et le réinjecte dans un réseau d'alimentation, de telle sorte que la puissance circulant du circuit intermédiaire de tension au réseau d'alimentation via le module de réinjection soit régulée à la valeur pilote.

2. Procédé selon la revendication 1,
**caractérisé en ce que**
le module maître (M) et/ou un participant au bus (S1, S2, S3, S4) écrit un chiffre de contrôle, en particulier une somme de contrôle CRC, dans le télégramme avant l'envoi et/ou la transmission du télégramme,
dans lequel chaque participant au bus (S1, S2, S3, S4), avant d'écraser la valeur de consommation électrique, évalue le chiffre de contrôle et transmet un télégramme défectueux sans changement au module maître (M).

3. Procédé selon la revendication 1 ou 2,
**caractérisé en ce que**
le module maître (M) évalue le chiffre de contrôle, rejette un télégramme défectueux et efface la valeur pilote du télégramme défectueux, de sorte que la valeur pilote stockée dans le module maître (M) reste inchangée.

4. Procédé selon l'une des revendications précédentes,
**caractérisé en ce que**
le module de réinjection régule la tension dans le circuit intermédiaire de tension,
dans lequel le module de réinjection convertit en courant alternatif, en particulier en courant alternatif sinusoïdal, un courant provenant du circuit intermédiaire de tension et le réinjecte dans un réseau d'alimentation si la valeur pilote est inférieure, en particulier en valeur absolue, à la puissance circulant du circuit intermédiaire de tension vers le réseau d'alimentation.

5. Procédé selon l'une des revendications précédentes,
**caractérisé en ce que**
le module de réinjection redresse un courant provenant du réseau d'alimentation et l'injecte dans le circuit intermédiaire lorsque la valeur pilote dépasse, en particulier en valeur absolue, la puissance circulant du réseau d'alimentation vers le circuit intermédiaire de tension.

6. Procédé de régulation d'un circuit intermédiaire de tension selon au moins l'une des revendications précédentes,
**caractérisé en ce que**
un régulateur de tension surveille les fluctuations de tension dans le circuit intermédiaire de tension et réajuste la tension dans le circuit intermédiaire de tension.

7. Système de bus présentant un module maître (M), un module de réinjection et des participants au bus (S1, S2, S3, S4) avec un circuit intermédiaire de tension commun, le circuit intermédiaire de tension pouvant être régulé au moyen d'un procédé de régulation d'un circuit intermédiaire de tension selon au moins l'une des revendications 1 à 5,
**caractérisé en ce que**
les participants au bus (S1, S2, S3, S4) et le module maître (M) sont disposés en série, dans lequel le module maître (M) et les participants au bus (S1, S2, S3, S4) sont reliés entre eux au moyen d'au moins une ligne de données (1, 2).

8. Système de bus selon la revendication 7,
**caractérisé en ce que**
un participant au bus (S1, S2, S3, S4) disposé au voisinage immédiat du module maître (M) présente la valeur de consommation électrique la plus élevée et/ou les plus grandes fluctuations de la valeur de consommation électrique.

9. Système de bus selon la revendication 7 ou 8,
**caractérisé en ce que**
le circuit intermédiaire de tension présente des barres conductrices qui relient entre eux le module maître (M) et les participants au bus (S1, S2, S3, S4).

10. Système de bus selon au moins l'une des revendications 7 à 9,
**caractérisé en ce que**
le module maître (M) présente un moyen de stockage de données dans lequel une valeur pilote pour le circuit intermédiaire de tension peut être stockée,
dans lequel le moyen de stockage de données peut être lu par l'unité de réinjection, en particulier pour la régulation du circuit intermédiaire de tension.

11. Système de bus selon au moins l'une des revendications 7 à 10,
**caractérisé en ce que**
chaque participant au bus (S1, S2, S3, S4) présente une unité de calcul,
dans lequel l'unité de calcul est conçue pour calculer une valeur de consommation électrique du participant au bus respectif (S1, S2, S3, S4) et/ou
dans lequel l'unité de calcul présente un moyen de sommation qui est conçu pour former la somme de deux valeurs de consommation électrique, en particulier pour calculer la valeur pilote.

12. Système de bus selon au moins l'une des revendications 7 à 11,
**caractérisé en ce que**
le module maître (M) et/ou les participants au bus (S1, S2, S3, S4) présentent chacun un moyen de mesure du temps.

13. Système de bus selon les revendications 11 et/ou 12,
**caractérisé en ce que**
chaque participant au bus (S1, S2, S3, S4) présente un circuit électronique,
dans lequel le circuit électronique présente le moyen de mesure du temps et/ou l'unité de calcul,
en particulier dans lequel le moyen de mesure du temps et/ou l'unité de calcul sont intégrés dans le circuit électronique.
